# EUROPEAN PATENT APPLICATION

(11) **EP 1 715 711 A1**
(43) Date of publication of application: **25.10.2006**
(21) Application number: 06008099.1
(22) Date of filing: 19.04.2006
(51) Int. Cl.: H04Q 7/38

(54) **Idle mode handoff in a mobile communications system**

(30) Priority: 19.04.2005 KR 2005032469
(71) Applicant: LG Electronics Inc., Yongdungpo-Gu Seoul 150-010 (KR)
(72) Inventor: Park, Young-Jae, Gwangmyeong, Gyeonggi-Do (KR)
(74) Representative: Katérle, Axel

(57) **Abstract**

A method and apparatus for idle mode handoff in an overlapping area of a multi-channel cell is provided. By monitoring different frequencies serviced by neighboring base stations, when a mobile station is located in an overlapping region between cells and the frequency channel being serviced in a multi-channel region is different from a channel being serviced in the neighboring base station, an idle mode handoff between cells may be smoothly performed.

## Description

### FIELD OF THE INVENTION

The present invention relates generally to a mobile communications system and, more particularly, to handoff in a mobile communications system.

### BACKGROUND OF THE INVENTION

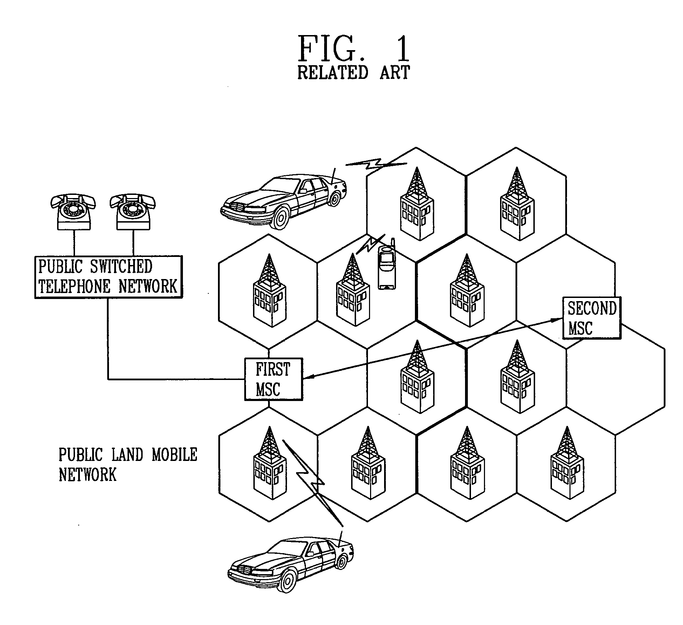

FIG. 1 is a diagram illustrating construction of an exemplary mobile communications system. Referring to FIG. 1, cellular mobile communications are a type of mobile communications technology in which communication service regions are divided into a plurality of cells, each cell having a Base Station (BS) that is centrally controlled by a Mobile Switching Center (MSC) to provide continuous communications services to a subscriber when moving between cells.

A cell of a cellular mobile communications network is a single channel cell for providing one frequency channel service. However, in areas with a large population such as in large cities, subscribers may not be adequately accommodated using only one frequency channel. Accordingly, a multi-channel cell having one or more channels, in addition to the basic channel to allow services on two or more frequency channels, may be used in such areas. However, in a multi-channel cell, channel allocation (e.g., channel hashing) may be difficult with respect to which channel each mobile station should use.

Channel hashing refers to uniformly distributing and providing several channels to mobile stations via a channel selection process using a hash algorithm. Accordingly, the mobile station receives an overhead message on a paging channel, and recognizes whether the mobile station is located in a multi-channel cell region. The mobile station thus analyzes the overhead message to detect the number of frequency channels provided in the current region, as well as frequency channel information, and determines which frequency channels are to receive services through the hash algorithm, using an International Mobile Station Identity (IMSI) of the mobile station.

The mobile station to which the channel is allocated through channel hashing may receive mobile communication services even while moving. However, in order to guarantee the communication services while the mobile station user (e.g., user) moves between cells in the mobile communications network, location registration technology and handoff (e.g., handover) technologies must be utilized.

The handoff technology refers to continuously maintaining a service even if a user moves beyond a service region of a BS or a sector in which the user is receiving services. The handoffs are divided into a soft handoff, a hard handoff, and an idle mode handoff. In an idle mode handoff, a mobile station periodically measures radio signal strengths of neighboring BSs while in an idle state, selects a BS with a better quality radio signal, and adjusts mobile station tuning to the corresponding BS.

FIG. 2 is a diagram illustrating a conceptual view of how an exemplary idle mode handoff is performed. Referring to FIG. 2, the mobile station monitors the signals of the neighboring BSs to enable the idle mode handoff to be performed without being controlled by the BS.

FIG. 3 is a diagram illustrating a conceptual view of how an exemplary idle mode handoff is performed in an overlapping area of a mobile communications system. FIG. 4 is a flow diagram illustrating an exemplary method for performing an idle mode handoff.

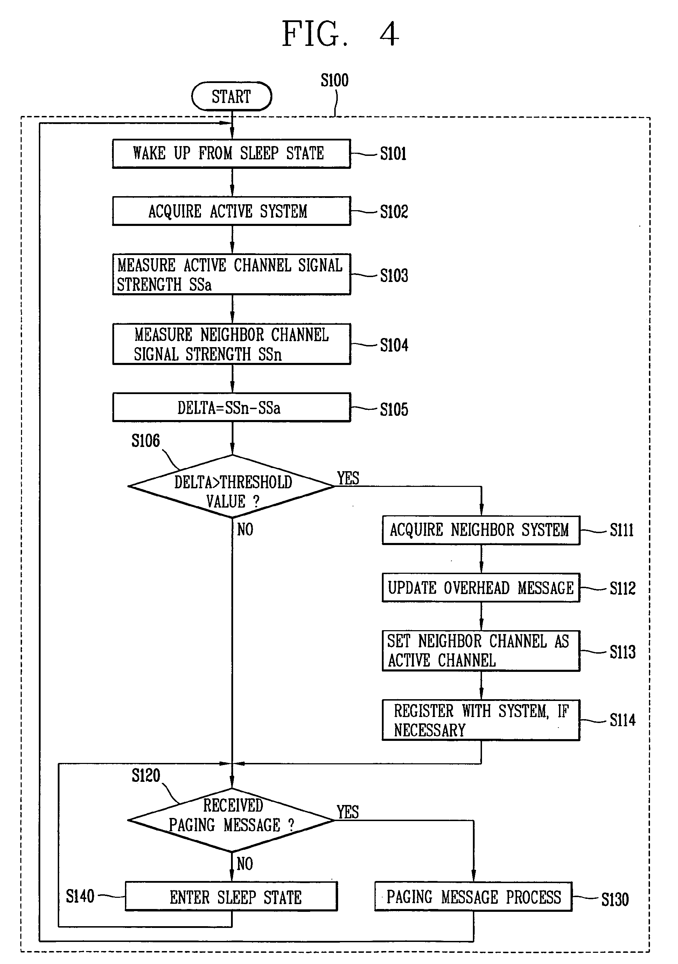

Referring to FIG. 4, the mobile station may be in a power saving mode called a 'sleep state'. The mobile station wakes up from the sleep state by receiving a paging message from the BS (S101). The mobile station receives an overhead message and then receives a service channel allocated thereto through a channel hashing algorithm using an IMSI. The mobile station then tunes to the allocated channel to acquire an active system and to access the communications system (S102). The mobile station monitors current neighbor channels while in an idle state to measure a signal strength (e.g., SSa) of an active channel and signal strengths (e.g., SSn) of neighbor channels of the neighboring BS (S103 and S104). If a value (e.g., delta) obtained by subtracting the signal strength of the active channel from that of the neighbor channel is greater than a certain threshold value, the mobile station determines that idle mode handoff must be performed (S105 and S106).

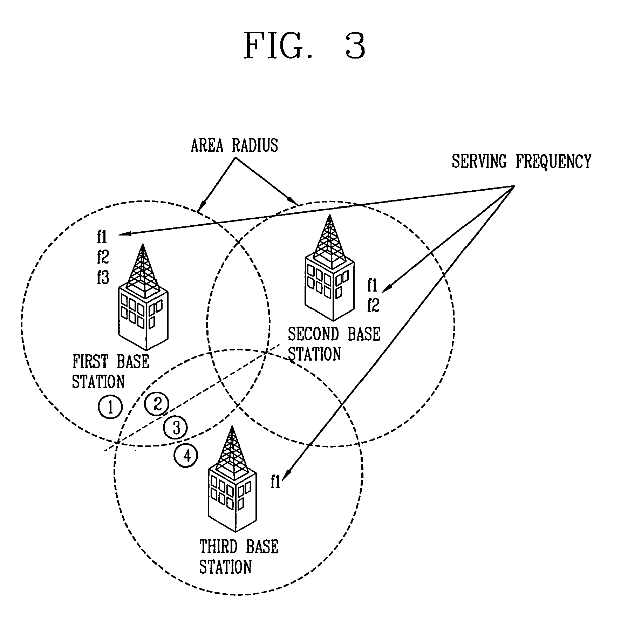

Referring to FIG. 3, based on the steps (S105 and S106) when the mobile station moves from BS 1 to BS 3, if a signal strength of a neighbor channel (e.g., f1 of the BS 3) is greater than that of an active channel (e.g., f1 of the BS 1), and the subtracted value delta is greater than the threshold value, then the mobile station is determined to be located in the region of the BS 3 (e.g., region ③), rather than in the region of the BS 1, as shown in FIG. 3. Therefore, the mobile station tunes to a neighbor channel of the BS 3 to acquire/access the neighboring system (S111). The mobile station then updates the overhead message transmitted from the BS 3 (S 112) and sets the neighbor channel as an active channel, thereby performing the idle mode handoff (S113). The mobile station may also register with the system (S114). The mobile station then confirms the paging message transmitted from the BS (S120). If no paging message exists, the mobile station reenters the sleep state (S 140).

However, the above-described idle mode handoff is performed only for the same frequency channel. Accordingly, when the mobile station moves to a single channel region from a multi-channel region, and if the channel acquired in the multi-channel region is different from the channel of the single channel BS, it may be difficult to perform an idle mode handoff. That is, since multiple channels are not always provided in overlapping area between cells, it may be difficult for the mobile station to properly receive a signal transmitted from the BS. As a result, the mobile station located in the overlapping area between cells enters a no-service state. After entering the no-service state, the mobile station initiates detection of other channels to acquire other channels by tuning to a channel of the corresponding BS. Accordingly, errors in paging messages may increase and signal reception rate may decrease. Furthermore, abnormal slotted mode operation reduces idle time and causes an increase in battery consumption.

### SUMMARY OF THE INVENTION

Accordingly, the present invention is directed to idle mode handoff in a mobile communications system that substantially obviates one or more problems due to limitations and disadvantages of the related art.

An object of the present invention is to provide a method and apparatus for idle mode handoff in an overlapping area of a multi-channel cell, for example when the mobile station moves from a multi-channel region to a single channel region in the mobile communications system. The present invention may thereby prevent the mobile station from entering a no-service state, reduce paging message errors, and increase a signal reception rate. The present invention may also thereby allow a slotted mode operation to be normally performed to increase idle time and decrease battery consumption. Another object of the present invention is to provide a software algorithm to enable the idle mode handoff to be performed in an overlapping area of the multi-channel cell.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

In one aspect of the present invention, a method for performing handoff in a mobile station is provided. The method includes receiving an overhead message from a network, the network comprising a plurality of cells with corresponding base stations, determining whether a current location is a multi-channel region based on the overhead message, determining whether the current location is an overlap region based on the overhead message, an overlap region being a region where two or more of the plurality of cells overlap, monitoring channels in the current location and determining whether an active monitored channel has the greatest signal strength if the current location is both a multi-channel region and an overlap region, determining a difference between the signal strength of the active channel and the signal strength of one of the monitored channels that has the greatest signal strength and comparing the difference to a threshold value if the active monitored channel does not have the greatest signal strength and requesting a handoff to one of the corresponding base stations that is transmitting on the channel having the greatest signal strength if the difference is greater than the threshold value.

It is contemplated that the method further includes receiving the overhead message from the network before the mobile station enters an idle mode. Preferably, requesting the handoff includes performing idle mode handoff.

Preferably, the threshold value includes an average value related to signal strengths of the monitored channels. It is contemplated that monitoring channels in the current location includes tuning channels provided by base stations corresponding to first and second cells in the overlap region and measuring signal strengths of the tuned channels.

It is contemplated that the base station corresponding to the first cell provides at least one of a single channel service and a multi-channel service. It is further contemplated that the base station corresponding to the second cell provides at least one of a single channel service and a multi-channel service. Preferably, the active monitored channel differs from channels provided in a neighboring cell of the plurality of cells.

In another aspect of the present invention, a mobile station adapted to perform handoff is provided. The mobile station includes a transceiver adapted to receive an overhead message from a network, the network comprising a plurality of cells with corresponding base stations and a processor operatively coupled to the transceiver and adapted to determine whether a current location is a multi-channel region and whether the current location is an overlap region based on the received overhead message, an overlap region being a region where two or more of the plurality of cells overlap, monitor channels in the current location and determine whether an active monitored channel has the greatest signal strength if the current location is both a multi-channel region and an overlap region, determine a difference between the signal strength of the active channel and the signal strength of one of the monitored channels that has the greatest signal strength and compare the difference to a threshold value if the active monitored channel does not have the greatest signal strength, and request a handoff to one of the corresponding base stations that is transmitting on the channel having the greatest signal strength if the difference is greater than the threshold value.

It is contemplated that the transceiver is further adapted to receive the overhead message from the network before the mobile station enters an idle mode. Preferably, the processor is further adapted to perform an idle mode handoff.

It is contemplated that the processor is further adapted to compare the difference to a threshold value comprising an average value related to signal strengths of the monitored channels. Preferably, the processor is further adapted to tune channels provided by base stations of first and second cells in the overlap region and to measure signal strengths of the tuned channels in order to monitor the channels in the current location.

It is contemplated that the base station of the first cell provides at least one of a single channel service and a multi-channel service. It is further contemplated that the base station of the second cell provides at least one of a single channel service and a multi-channel service. Preferably, the active monitored channel differs from channels provided in a neighboring cell of the plurality of cells.

In another aspect of the present invention, a method for performing idle handoff of a mobile communications terminal is provided. The method includes determining that the mobile communications terminal is located in an overlapping region between a first cell, in which a currently acquired base station provides at least one active frequency channel, and a second cell, monitoring frequency channels other than the active frequency channel, selecting a frequency channel having the greatest signal strength of the monitored frequency channels, determining whether the selected frequency channel is provided from a base station in the first cell or the second cell and performing an idle handoff from the first cell to the second cell if it is determined that the selected frequency channel is provided from a base station in the second cell.

It is contemplated that the determination whether the selected frequency channel is provided from a base station in the first cell or the second cell is made based on information received in an overhead message transmitted from a mobile communications system. It is further contemplated that the determination that the mobile communications terminal is located in an overlapping region is made based on information received in an overhead message transmitted from a mobile communications system.

It is contemplated that determining that the mobile communications terminal is located in an overlapping region includes measuring signal strengths of frequency channels other than the active frequency channel, selecting a frequency channel having the greatest signal strength of the monitored frequency channels and comparing the signal strength of the selected frequency channel to a threshold value. Preferably, it is determined that the mobile communications terminal is located in an overlapping region if the signal strength of the selected frequency channel is smaller than the threshold value.

It is contemplated that the first cell is a multiple frequency channel cell in which the base station provides a plurality of channel services. It is further contemplated that the first cell is a cell providing a single frequency channel service.

It is contemplated that the second cell is a multiple frequency channel cell in which the base station provides a plurality of channel services. It is further contemplated that the second cell is a cell providing a single frequency channel service.

It is contemplated that monitoring frequency channels other than the active frequency channel includes tuning each frequency channel, other than an active frequency channel, provided by the currently acquired base station in the first cell other than an active frequency channel, tuning each frequency channel provided by a base station in the second cell, performing system acquisition to each tuned frequency channel, measuring signal strength of each acquired frequency channel, comparing the measured signal strength of each acquired frequency channel to a threshold value and selecting a frequency channel having signal strength greater than the threshold value. Preferably, the threshold value is an average value obtained by calculating signal strengths of frequency channels.

The foregoing and other objects, features, aspects and advantages of the present invention will become more apparent from the following detailed description of the present invention when taken in conjunction with the accompanying drawings. It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiments of the invention and together with the description serve to explain the principles of the invention.

FIG. 1 is a diagram illustrating construction of an exemplary mobile communications system.

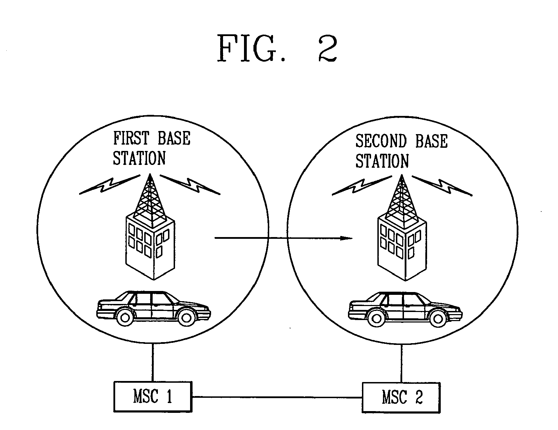

FIG. 2 is a diagram illustrating a conceptual view of how an exemplary idle mode handoff is performed.

FIG. 3 is a diagram illustrating a conceptual view of how an exemplary idle mode handoff is performed in an overlapping area of a mobile communications system.

FIG. 4 is a flow diagram illustrating an exemplary method for performing an idle mode handoff.

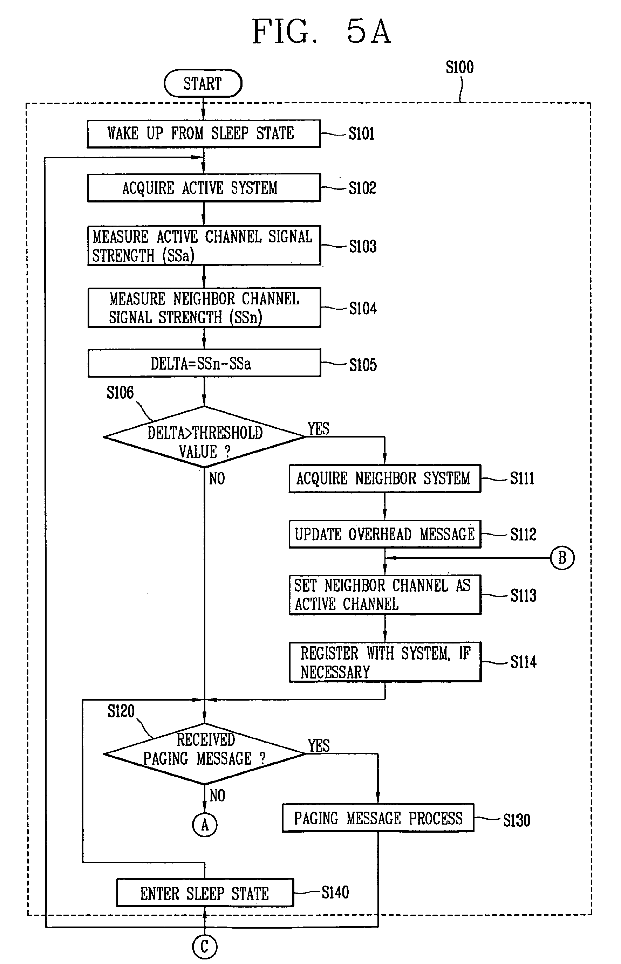

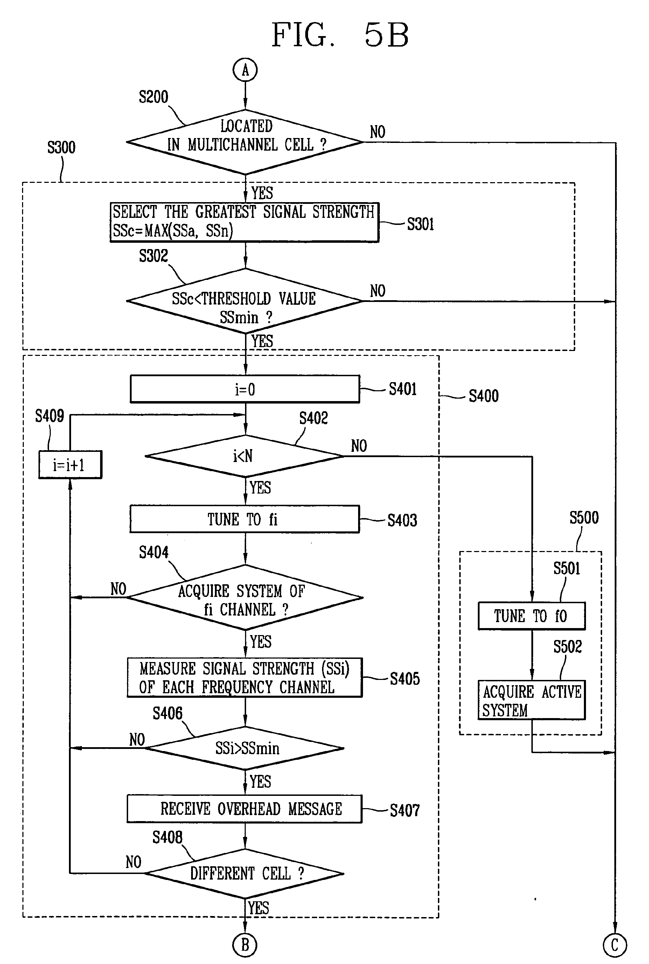

FIG. 5A and 5B are flow diagrams illustrating methods for performing an idle mode handoff, according to an embodiment of the present invention.

### DETAILED DESCRIPTION OF THE PREFERRED EMBODIMENTS

Reference will now be made in detail to the preferred embodiments of the present invention, examples of which are illustrated in the accompanying drawings. Wherever possible, the same reference numbers will be used throughout the drawings to refer to the same or like parts.

The present invention may be implemented in various types of mobile communications systems, such as cellular, PCS (personal communications service) or PHS (personal handy-phone system), for example. The term 'cellular' is used herein to refer to any type of communications system that uses cells. There are various types of mobile stations, including mobile phones, handsets, PDAs (personal digital assistants), and computers, as well as any other devices with wireless communication capabilities. A mobile station may also be referred to as a mobile terminal or a terminal.

Idle mode handoff in a mobile communications system is described below. An idle mode handoff may also be called an idle handoff. To perform the techniques described herein, an exemplary mobile station may include a transceiver for communicating data with a network, a processor for processing received data, and a memory for storing received and/or processed data.

Channels (e.g., frequency channels) having different frequencies may not be monitored in a conventional idle mode handoff. Therefore, the present invention enables an idle mode handoff between cells to be smoothly performed by monitoring different frequencies serviced by neighboring Base Stations (BSs). Accordingly, if a mobile station is located in an overlapping region between cells and the frequency channel being serviced in the multi-channel region is different from a channel being serviced in the neighboring BS, the techniques of the present invention may provide several advantages.

FIG. 3 is a diagram illustrating a conceptual view of how an exemplary idle mode handoff is performed in an overlapping area of a mobile communications system.

Referring to FIG. 3, a cell area of each BS is provided with channel services, such as a multi-channel including frequency channels f1, f2 and f3 from a BS 1, a multi-channel including frequency channels f1 and f2 from a BS 2, and a single channel, such as the frequency channel f1 from a BS 3, for example.

FIG. 4 is a flow diagram illustrating an exemplary method for performing an idle mode handoff. FIGS. 5A and 5B are flow diagrams illustrating methods for performing an idle mode handoff according to an embodiment of the present invention. As such, the flow diagrams of FIGS. 5A and 5B include an algorithm for performing the idle mode handoff.

Referring to FIGS. 5A and 5B, the idle mode handoff method includes determining whether a mobile station is located within a cell in which a multiple frequency channel is provided (S200), determining whether the mobile station is located in an overlapping region with another cell (S300), and, if the mobile station is located in a multiple frequency channel service cell and also in the overlapping region with another cell, allowing the idle mode handoff to be performed by monitoring different frequency channels (e.g., channels other than an active channel) (S400).

Referring to FIGS. 3 - 5B, an exemplary mobile station moves sequentially from a first region (e.g., region ①) of a corresponding cell associated with BS 1 to other regions (e.g., region ②, region ③, and region ④) in the direction toward the BS 3. The mobile station is currently located in the overlapping region (e.g., region ③) between cells. The exemplary mobile station receives a paging message transmitted from the mobile communications system and is in a system acquisition state using an active channel (e.g., active set) by receiving an allocated frequency channel f2 from among multi-channels f1 to f3 of BSs via a channel hashing algorithm. Therefore, the mobile station may recognize the remaining channels f1 and f3 (e.g., channels other than the active channel f2) as neighbor channels (e.g., neighbor sets).

Before entering a sleep state in execution of an idle mode handoff (S 100), the mobile station confirms an overhead message and determines whether it is located in a region (or cell) provided with a multi-channel service (S200). The mobile station, or other system component, then determines whether the mobile station is located in an overlapping region between cells (S300).

The step (S300) may be performed in two sub-steps. First, a maximum value SSc among a signal strength SSa of the active channel f2 and signal strengths SSn of the neighbor channels f1 and f3 are selected (S301). Then, if the selected value SSc is smaller than a certain threshold value SSmin, it is determined that the mobile station is located in an overlapping region between cells (e.g., between a cell of the BS 1 and a cell of the BS 3) (S302).

In the step S300, if the signal strength SSa of the active channel f2 is selected as the maximum value SSc and the signal strength SSa is smaller than the threshold value SSmin, it denotes that the mobile station is located in an overlapping region (e.g., region ②) of a cell boundary, in which the corresponding BS (BS 1) may provide services. Similarly, in the step S301, if the signal strengths SSn of the neighbor channels f1 and f3 are greater than the signal strength SSa of the active channel f2 and are selected as the maximum value SSc, and the signal strength SSn is smaller than the threshold value SSmin, then the mobile station is located in the overlapping region (e.g., in the region ③) of the cell of another BS (BS 3). If the mobile station is not located in the multi-channel BS or not located in the overlapping region, the mobile station goes into the sleep mode (S140).

Through the steps (S200) and (S300), the mobile station confirms whether it is located in the overlapping region (e.g., region ③) of a multi-channel region (e.g., BS 1). The neighbor channels of the neighboring BSs are therefore monitored to provide a smooth idle mode handoff.

The monitoring of the neighbor channels may be performed by measuring a signal strength of a frequency channel and comparing the measured signal strength against a threshold value. The determination of whether to perform the idle mode handoff may thus be made based on this comparison of the measured signal strength against the threshold value. That is, if the BS signal strength to the mobile station in the multi-channel region is less than the threshold value, each channel fi (e.g., i=0, 1,..., n-1) is detected among N-numbered channels (e.g., f0, f1, f2, f3, ..., fn-1) provided in the neighboring cells to enable selection of a system of a sufficient signal strength SSi (e.g., i=0, 1,..., n-1). Then, if the selected system is different from a present cell, the corresponding system is acquired.

The mobile station tunes to each neighbor channel f1 and f3 except for the active channel f2 (indicated as f0 in FIGS. 5A and 5B) using an overhead message (S401, S402 and S403). If the mobile station tunes the neighbor channel f3 (S403), system detection is performed to acquire a system of the corresponding channel f3 (S404) and signal strength SS3 of the frequency channel f3 is measured (S405).

If it is confirmed that the measured signal strength value SS3 is greater than a certain threshold value SSmin (S406), the mobile station receives an overhead message of the acquired system (S407) and then determines whether a frequency system of the channel f3 is a different frequency system (e.g., f1 system of the BS 3) of a different cell (S408). If according to the determination, it is determined that the frequency system of the channel f3 is different from that of the active channel f2, but both the frequency systems belong to the same cell (e.g., the cell of the BS 1). The monitoring operation for the neighbor channel f1 other than the channel f3 may be performed through the same processes.

That is, after tuning the channel f1 using the overhead message (S403) and acquiring a system corresponding to the channel f1 (S404), the mobile station measures a signal strength value SS 1 of the frequency channel f1 (S405) and compares it with the threshold value SSmin (S406). If the measured signal strength value SS 1 is greater than the threshold value SSmin (S406), the mobile station receives the overhead message of the acquired system to determine whether the frequency system of the channel f1 is a different frequency system (e.g., f1 system of the BS 3) of a different cell (S408). Therefore, because the frequency system of the channel (e.g., f1 of the BS 3) belongs to a different cell than a cell to which the frequency system of the active channel belongs (e.g., f2 of the BS 1), the neighbor channel f1 is set as an active channel so as to perform the idle mode handoff (S 113).

Thus, by monitoring neighbor channels of neighboring BSs, the idle mode handoff from the BS 1 to the BS 2 in which the signal strength SS1 is adequate may be smoothly performed even in the overlapping region (e.g., region ③) between cells without system loss. The mobile station may then perform a registration process with the system of the BS 2 (S114) as needed, and enter a sleep state if the paging message is not received (S 140).

However, in the monitoring step S400, when detecting signal strengths SSi (e.g., SS1 and SS3 in FIG. 3) of the neighbor channels fi (e.g., f1 and f3 in FIG. 3), if the signal strength SSi is smaller than the threshold value SSmin, the mobile station which has acquired the active channel f0 (e.g., f2 in FIG. 3) tunes to the active channel f0 (e.g., f2 in FIG. 3) (S501). Then, the mobile station acquires an active system of the corresponding channel f2 and enters the sleep state (S 140).

In the present invention, implementation of the algorithm may utilize software and/or hardware. For example, software may be stored in a storage media (e.g., a memory or a flash memory) of a mobile station or a User Equipment (UE), and also may be implemented as codes or instructions within a software program capable of performed by a processor (e.g., a microprocessor within the UE).

In idle mode handoff according to the present invention, if the mobile station moves from a base station providing a multi-channel service to a single channel or to a cell, which is providing channels less than the number of systems acquired, monitoring multiple channels may prevent problems of system loss. In addition, by applying the algorithm according to the present invention, the mobile station may smoothly perform the idle mode handoff to a base station with a good radio environment by monitoring other channels in an overlapping cell region. Furthermore, because the idle mode handoff is smoothly performed, the slotted mode may be operated normally and idle time may be increased, thereby reducing battery consumption.

It will be apparent to those skilled in the art that various modifications and variations may be made in the present invention without departing from the spirit or scope of the inventions. Thus, it is intended that the present invention covers the modifications and variations of this invention provided they come within the scope of the appended claims and their equivalents.

## Claims

1. A method for performing handoff in a mobile station, the method comprising:
receiving an overhead message from a network, the network comprising a plurality of cells with corresponding base stations;
determining whether a current location is a multi-channel region based on the overhead message;
determining whether the current location is an overlap region based on the overhead message, an overlap region being a region where two or more of the plurality of cells overlap;
monitoring channels in the current location and determining whether an active monitored channel has the greatest signal strength if the current location is both a multi-channel region and an overlap region;
determining a difference between the signal strength of the active channel and the signal strength of one of the monitored channels that has the greatest signal strength and comparing the difference to a threshold value if the active monitored channel does not have the greatest signal strength; and
requesting a handoff to one of the corresponding base stations that is transmitting on the channel having the greatest signal strength if the difference is greater than the threshold value.

2. The method of claim 1, further comprising receiving the overhead message from the network before the mobile station enters an idle mode.

3. The method of claim 2, wherein requesting the handoff comprises performing idle mode handoff.

4. The method of claim 1, wherein the threshold value comprises an average value related to signal strengths of the monitored channels.

5. The method of claim 1, wherein monitoring channels in the current location comprises:
tuning channels provided by base stations corresponding to first and second cells in the overlap region; and
measuring signal strengths of the tuned channels.

6. The method of claim 5, wherein the base station corresponding to the first cell provides at least one of a single channel service and a multi-channel service.

7. The method of claim 1, wherein the base station corresponding to the second cell provides at least one of a single channel service and a multi-channel service.

8. The method of claim 6, wherein the active monitored channel differs from channels provided in a neighboring cell of the plurality of cells.

9. A mobile station adapted to perform handoff, the mobile station comprising:
a transceiver adapted to receive an overhead message from a network, the network comprising a plurality of cells with corresponding base stations; and
a processor operatively coupled to the transceiver and adapted to determine whether a current location is a multi-channel region and whether the current location is an overlap region based on the received overhead message, an overlap region being a region where two or more of the plurality of cells overlap, monitor channels in the current location and determine whether an active monitored channel has the greatest signal strength if the current location is both a multi-channel region and an overlap region, determine a difference between the signal strength of the active channel and the signal strength of one of the monitored channels that has the greatest signal strength and compare the difference to a threshold value if the active monitored channel does not have the greatest signal strength, and request a handoff to one of the corresponding base stations that is transmitting on the channel having the greatest signal strength if the difference is greater than the threshold value.

10. The mobile station of claim 9, wherein the transceiver is further adapted to receive the overhead message from the network before the mobile station enters an idle mode.

11. The mobile station of claim 9, wherein the processor is further adapted to perform an idle mode handoff.

12. The mobile station of claim 9, wherein the processor is further adapted to compare the difference to a threshold value comprising an average value related to signal strengths of the monitored channels.

13. The mobile station of claim 9, wherein, the processor is further adapted to tune channels provided by base stations of first and second cells in the overlap region and to measure signal strengths of the tuned channels in order to monitor the channels in the current location.

14. The mobile station of claim 13, wherein the base station of the first cell provides at least one of a single channel service and a multi-channel service.

15. The mobile station of claim 14, wherein the base station of the second cell provides at least one of a single channel service and a multi-channel service.

16. The mobile station of claim 9, wherein the active monitored channel differs from channels provided in a neighboring cell of the plurality of cells.

17. A method for performing idle handoff of a mobile communications terminal, the method comprising:
determining that the mobile communications terminal is located in an overlapping region between a first cell, in which a currently acquired base station provides at least one active frequency channel, and a second cell;
monitoring frequency channels other than the active frequency channel;
selecting a frequency channel having the greatest signal strength of the monitored frequency channels;
determining whether the selected frequency channel is provided from a base station in the first cell or the second cell; and
performing an idle handoff from the first cell to the second cell if it is determined that the selected frequency channel is provided from a base station in the second cell.

18. The method of claim 17, wherein the determination whether the selected frequency channel is provided from a base station in the first cell or the second cell is made based on information received in an overhead message transmitted from a mobile communications system.

19. The method of claim 17, wherein the determination that the mobile communications terminal is located in an overlapping region is made based on information received in an overhead message transmitted from a mobile communications system.

20. The method of claim 17, wherein determining that the mobile communications terminal is located in an overlapping region comprises:
measuring signal strengths of frequency channels other than the active frequency channel;
selecting a frequency channel having the greatest signal strength of the monitored frequency channels; and
comparing the signal strength of the selected frequency channel to a threshold value.

21. The method of claim 20, wherein it is determined that the mobile communications terminal is located in an overlapping region if the signal strength of the selected frequency channel is smaller than the threshold value.

22. The method of claim 20, wherein the threshold value is an average value obtained by calculating signal strengths of frequency channels.

23. The method of claim 17, wherein the first cell is a multiple frequency channel cell in which the base station provides a plurality of channel services.

24. The method of claim 17, wherein the first cell is a cell providing a single frequency channel service.

25. The method of claim 17, wherein the second cell is a multiple frequency channel cell in which the base station provides a plurality of channel services.

26. The method of claim 17, wherein the second cell is a cell providing a single frequency channel service.

27. The method of claim 17, wherein monitoring frequency channels other than the active frequency channel comprises:
tuning each frequency channel, other than an active frequency channel, provided by the currently acquired base station in the first cell other than an active frequency channel;
tuning each frequency channel provided by a base station in the second cell;
performing system acquisition to each tuned frequency channel;
measuring signal strength of each acquired frequency channel;
comparing the measured signal strength of each acquired frequency channel to a threshold value; and
selecting a frequency channel having signal strength greater than the threshold value.
